# EUROPÄISCHE PATENTSCHRIFT

(11) **EP 2 874 978 B1**
(45) Veröffentlichungstag und Bekanntmachung des Hinweises auf die Patenterteilung: **05.07.2017**
(21) Anmeldenummer: 13742415.6
(22) Anmeldetag: 19.07.2013
(51) Int. Cl.: C04B 22/00, C04B 103/10, C04B 22/06, C04B 22/10, C04B 103/12, C04B 103/14

(54) **VERWENDUNG HYDRATATIONSBESCHLEUNIGENDER KEIME ALS ZUSATZSTOFF FÜR ZEMENT UND/ODER BETON**
USE OF HYDRATION-ACCELERATING SEEDS AS AN ADDITIVE FOR CEMENT AND/OR CONCRETE
UTILISATION DE GERMES ACCÉLÉRANT L'HYDRATATION COMME ADDITIF POUR DU CIMENT ET/OU DU BÉTON

(30) Priorität: 23.07.2012 DE 102012106658
(43) Veröffentlichungstag der Anmeldung: 27.05.2015
(73) Patentinhaber: ThyssenKrupp Industrial Solutions AG, 45143 Essen (DE)
(72) Erfinder: ENDERS, Michael, 48143 Münster (DE)
(74) Vertreter: thyssenkrupp Intellectual Property GmbH
(86) Internationale Anmeldenummer: PCT/EP2013/065280
(87) Internationale Veröffentlichungsnummer: WO 2014/016209

(56) Entgegenhaltungen:
- WO-A1-2010/026155
- DE-B- 1 066 470
- DE-T2- 69 407 418
- FR-A- 1 276 696
- US-A1- 2003 005 860

## Beschreibung

Die Erfindung betrifft eine Verwendung hydratationsbeschleunigender Keime aus einer Mischung aus zwei oder mehreren der CSH-Phasen oder AFt/AFm-Phasen oder Hemi- oder Monocarbonat-Phasen.

Bei der Zementhydratation reagieren die verschiedenen Zementklinkerphasen mit Wasser im Wesentlichen zu den Zementsteinphasen Calcium-Silikat-Hydrat, Ettringit, Calcium-Aluminat-Ferrit-Phasen, Monosulfat und Portlandit.

Aus der WO 2010026155 A1 ist es bekannt, die Zementhydratation durch Zugabe von CSH-Keimen zu Zement oder in Beton zu beschleunigen. Die Festigkeitsentwicklung eines Zements lässt sich durch die Zugabe von derartigen CSH-Keimen beschleunigen. Hierbei wird durch die Keimzugabe die Aktivierungsenergie für Teilreaktionen der Zementhydratation reduziert. Außerdem dienen diese Keime als Nuklei für die Neubildung der CSH-Phase. Bei der Herstellung der CSH-Keime gemäß der WO 2010026155 A1 reagiert eine wasserlösliche Calciumkomponente mit einer wasserlöslichen Siliziumkomponente in einer wässrigen Lösung, die zudem ein wasserlösliches Kammpolymer enthält, das als Fließmittel für hydraulische Bindemittel geeignet ist.

Die EP 1923 366 A1 beschreibt ein Verfahren zur Aufarbeitung von Bypassstäuben, wobei die Bypassstäube mit einer wässrigen Phase in Kontakt gebracht werden und anschließend feste und unlösliche Bestandteile abgetrennt werden.

Aus der DE 694 07 418 T2 ist ein Erstarrungs- und Härtungsbeschleuniger für silikatische, hydraulische Bindemittel bekannt, der insbesondere aus der Hydratation von künstlichen Portland-Zementen, zerkleinerten Portland-Klinkern oder zusammengesetzten Portland-Zementen oder Mischungen der vorgenannten Ausgangsmaterialien hervorgeht.

Die auf dem Markt erhältlichen Produkte mit hydratationsbeschleunigenden Keimen sind jedoch relativ teuer, sodass die Einsatzmöglichkeiten begrenzt sind. Die Erfindung betrifft eine neue Verwendung für hydratationsbeschleunigende Keime aus einer Mischung aus zwei oder mehreren der CSH-Phasen oder AFt/AFm-Phasen oder Hemi- oder Monocarbonat-Phasen deren Herstellung hinsichtlich des Aufwandes und der Kosten reduzieren ist.

Erfindungsgemäß wird diese Aufgabe durch die Merkmale des Anspruches 1 gelöst, indem Heißmehl und/oder Bypassstaub aus einem Zementherstellungsprozess als Ausgangsmaterial zur Herstellung von hydratationsbeschleunigenden Keimen aus einer Mischung aus zwei oder mehreren der nachfolgend aufgeführten Phasen, nämlich CSH-Phasen oder AFt/AFm-Phasen oder Hemi- oder Monocarbonat-Phasen, als Zusatzstoff für Zement und/oder Beton verwendet wird, wobei
a. eine Suspension durch Vermischen des Ausgangsmaterials mit einer wässrigen Lösung hergestellt wird, bis sich ein aus hydratationsbeschleunigenden Keimen bestehender Feststoff bildet, und
b. der aus den hydratationsbeschleunigenden Keimen bestehende Feststoff aus der wässrigen Lösung abgetrennt und durch Mahlung weiter zerkleinert wird.

Die Verwendung von Zwischenprodukten des Zementherstellungsprozesses stellt eine vergleichsweise kostengünstige Möglichkeit zur Bereitstellung des Ausgangsmaterials dar. Hydratationsbeschleunigende Keime können somit als Nebenprodukt bei der Zementherstellung gewonnen werden.

Weitere Ausgestaltungen der Erfindung sind Gegenstand der Unteransprüche.

Im Verfahrensschritt a) erfolgt das Vermischen vorzugsweise durch kontinuierliches Rühren, wobei es zweckmäßig ist, wenn dies in einem Reaktor in einem Temperaturbereich von 5 bis 200°C, vorzugsweise von 15 bis 80°C erfolgt. Weiterhin hat es sich als vorteilhaft erwiesen, wenn der *p*H-Wert der Suspension in einem Bereich von 10 bis 14 eingestellt wird, indem insbesondere das Verhältnis von Ausgangsmaterial zu wässriger Lösung entsprechend angepasst wird.

Höhere Temperaturen beschleunigen das Wachstum der hydratationsbeschleunigenden Keime solange eine kritische, phasenspezifische, obere Temperaturgrenze nicht überschritten wird. Durch eine geeignete Auswahl der Reaktionszeit und der Temperatur im Reaktor lassen sich weiterhin abhängig von der mineralogisch/chemischen Zusammensetzung der Ausgangsstoffe gezielt hydratationsbeschleunigende Keime einer bestimmten Zusammensetzung und Größe erzeugen. Weiterhin kann es erforderlich sein, dass der Verfahrensschritt a) in einer Schutzgasatmosphäre, insbesondere unter CO₂-Abschluss durchgeführt wird, um die Bildung von Calciumcarbonat zu verhindern.

Die Einstellung der gewünschten Mischung der oben angegebenen Phasen erfolgt durch externe Parameter, wie der Temperatur im Reaktor und/oder der *p*H-Konzentration der chemischen Bestandteile in der Lösung.

Befinden sich im Ausgangsmaterial auch inerte Materialien, wie beispielsweise Quarz oder Eisenerz, besteht die Möglichkeit, diese inerten Materialien während oder nach dem Verfahrensschritt a) auszuschleusen, um dadurch die Menge und Qualität der hydratationsbeschleunigenden Keime im Endprodukt zu regeln. Inertes Material, wie Quarz und Eisenerz, wird sich im Verfahrensschritt b) als Sediment absetzen und kann dann auf einfache Art und Weise ausgeschleust werden.

Nach dem Verfahrensschritt b) können die abgetrennten Keime noch Restfeuchten von weniger als 15 Gew.-%, vorzugsweise von weniger als 10 Gew.-%, höchstvorzugsweise von weniger als 7 Gew.-%, aufweisen.

Es besteht aber auch die Möglichkeit, dieses inerte Material zusammen mit den gebildeten Keimen als Feststoff aus der wässrigen Lösung abzutrennen. Das Abtrennen des Feststoff aus der wässrigen Lösung erfolgt beispielsweise in einem Hydrozyklon oder einer Filterpresse. Die im Verfahrensschritt b) verbleibende wässrige Lösung kann zumindest teilweise erneut als wässrige Lösung im Verfahrensschritt a) verwendet werden. Üblicherweise wird die nach dem Verfahrensschritt b) verbleibende wässrige Lösung mit löslichen Bestandteilen und/oder Schadstoffen aus dem Ausgangsmaterial belastet sein, sodass es zweckmäßig ist, wenigstens einen Teil der wässrigen Lösung auszuschleusen und einer Abtrennung löslicher Bestandteile oder Schadstoffe zu unterziehen.

Der im Verfahrensschritt b) abgetrennte Feststoff kann mit oder ohne etwaigem inerten Material durch Mahlung weiter zerkleinert werden. Für den Einsatz der hydratationsbeschleunigenden Keime als Zusatzstoff für Zement und/oder Beton hat sich eine Korngröße im Bereich von 10 nm bis 20 µm als zweckmäßig erwiesen.

Weitere Vorteile und Ausgestaltungen der Erfindung werden im Folgenden anhand der nachfolgenden Beschreibung und der Zeichnung näher erläutert.

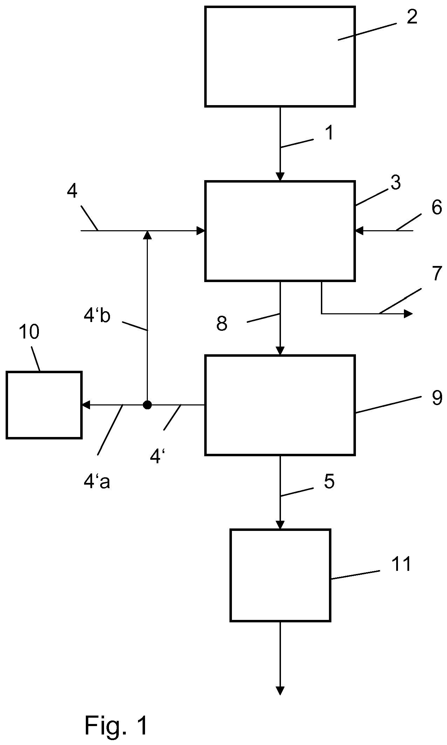

Fig. 1 zeigt ein schematisches Ablaufschema des Verfahrens zur Herstellung der hydratationsbeschleunigenden Keime.

Als Ausgangsmaterial 1 werden Zwischenprodukte eines Zementherstellungsprozesses 2 verwendet. Hierbei kann es um Heißmehl und/oder Bypassstaub handeln. Das Ausgangsmaterial wird an geeigneten Stellen aus dem Zementherstellungsprozess ausgeschleust und einem Reaktor 3 zugegeben, wo durch Mischen des Ausgangsmaterials 1 mit einer wässrigen Lösung 4 durch kontinuierliches Rühren eine Suspension hergestellt wird, bis sich ein aus hydratationsbeschleunigenden Keimen bestehender Feststoff 5 bildet. Dieser Verfahrensschritt kann bis zu einigen Tagen dauern.

Durch den Freikalk aus dem Ausgangsmaterial 1 stellt sich in der wässrigen Lösung 4 ein *p*H-Wert zwischen 10 und 14 ein:

CaO+H₂O=Ca(OH)₂ (1)

Die besondere Phasenzusammensetzung des Ausgangsmaterials 1 löst eine Hydratationsreaktion aus, wobei sich in der wässrigen Lösung 4 aus dem Ausgangsmaterial (z. B. Metakaolin, C2S, Schmelzphase, C3S) zusammen mit dem gelösten Calciumhydroxid und Wasser, in einem Prozess ähnlich der Zementhydratation, hydratationsbeschleunigende Keime 5 bilden.

Das Ausgangsmaterial 1 liegt in unterschiedlicher Reinheit vor. Abhängig vom Reaktionsumsatz, der Temperatur und der Reinheit des Ausgangsmaterials kann ein teilweiser bis vollständiger Umsatz zu den hydratationsbeschleunigenden Keimen aus CSH-Phasen und/oder AFt/AFm-Phasen und/oder Hemi- oder Monocarbonat-Phasen erreicht werden. Ebenso kann durch eine Vorwahl der Temperatur im Reaktor, der Zusammensetzung der Ausgangsstoffe und der Stabilitätsbereiche der Hydratationsprodukte die Art und Menge der Hydratationsprodukte teilweise oder vollständig bestimmt werden. Es kommt dabei insbesondere zu folgenden Reaktionen

### CSH-Phase:

3CaO*SiO₂+ 5.3H₂O=1.7CaO-SiO₂-4H₂O+1.3Ca(OH)₂ (2)

1.7Ca(OH)₂+ SiO₂+ 4H₂O==1.7CaO-SiO₂-4H₂O (3)

### AFt/AFm-Phase:

Ca₃Al₂O₆+32H₂O+3CaSO₄=(CaO)₆(Al₂O₃)(SO₃)₃*32H₂O (4)

Ca₃Al₂O₆+12H₂O+CaSO₄=Ca₄Al₂(SO₄)(OH)₁₂*6H₂O (5)

### Hemi- oder Monocarbonat-Phase:

Ca₃Al₂O₆+11H₂O+CaCO₃=Ca₄Al₂(CO₃)(OH)₁₂*5H₂O (6)

2Ca₃Al₂O₆+23H₂O+Ca(OH)₂+CaCO₃=2Ca₄Al₂(CO₃)_{0.5}(OH)₁₃*5.5H₂O (7)

### Reaktion mit Metatonen:

3.7Cₐ(OH)₂+Al₂Si₂O₅+12H₂O=Ca₂Al₂SiO₇*8H₂O+1.7CaO-SiO₂-4H₂O (8)

Die Reaktion im Reaktor 3 erfolgt vorzugsweise in einer Schutzgasatmosphäre, um insbesondere die Bildung von Calciumcarbonat zu verhindern. Des Weiteren kann der Reaktionsumsatz gezielt durch die Einstellung einer bestimmten Temperatur der Suspension und/oder der Alkalinität der Suspension geregelt werden. Je nach zur Verfügung stehendem Ausgangsmaterial 1 wird man die Temperatur im Reaktor 3 im Bereich von 5 bis 200°C einstellen.

Weiterhin hat es sich als zweckmäßig herausgestellt, wenn der *p*H-Wert der Suspension im Reaktor 3 in einem Bereich von 10 bis 14 eingestellt wird. Der *p*H-Wert ist ein Maß für den Protonen- und Hydroxylionengehalt einer wässrigen Lösung.

Die Einstellung des *p*H-Wertes erfolgt auf einfacher Art und Weise indem das Verhältnis von Ausgangsmaterial 1 und wässriger Lösung 4 entsprechend angepasst wird. Hydratphasen bilden sich aus den Ausgangsprodukten zementärer Systeme bei *p*H-Werten über 10. Nur dann liegen beispielsweise ausreichend Ca²⁺-Ionen und HₙSiO4⁽⁴⁻ⁿ⁾-Ionen für die Bildung von CSH-phasen vor. Bei Zutritt von CO₂ bildet sich CaCO₃. Durch die dabei stattfindende Absenkung des *p*H-Wertes wird die Hydratphasenbildung unterdrückt.

CaO+CO₂=CaCO₃ (9)

Insbesondere die Stabilitätsbereiche der AFt- und AFm-Phasen sind durch eine obere maximale Temperatur für die Phasenbildung bei 40 - 50°C charakterisiert. Diese obere Temperatur ermöglicht durch Vorwahl der Reaktortemperatur gezielt mineralogische Zusammensetzungen für das Produkt aus hydratationsbeschleunigenden Keimen einzustellen oder aber auch hydratationsbeschleunigende Keime vorwiegend aus CSH-Phasen bestehend herzustellen.

Es ist auch denkbar, die Reaktion durch weitere Zusatzmittel 6, wie gelöschten Kalk, Alkaliverbindungen, Sulfatverbindungen oder Chloride zu beeinflussen.

Der Verlauf und der Abschluss der Reaktion kann zum Beispiel durch die Verfügbarkeit von Calcium, Silizium oder Aluminiumspezies in der wässrigen Lösung 4 direkt abgebildet werden. Analytische Verfahren hierzu sind insbesondere aus der Zementchemie (Porenlösungsanalyse) bekannt. Weitere bekannte Verfahren, um den Reaktionsfortschritt und die Qualität des Produkts zu charakterisieren, sind Röntgenbeugungsverfahren und elektronenmikroskopischen Verfahren durch Phasenquantifizierung im Hydratationsprodukt und den Ausgangstoffen oder thermogravimetrische Messungen des gebundenen Wassers.

Enthält das Ausgangsmaterial 1 inertes Material, wie beispielsweise Quarz oder Eisenerz, so kann es wünschenswert sein, dieses Material von den hydratationsbeschleunigenden Keimen 5 abzutrennen. Dies kann beispielsweise durch Sedimentation im Reaktor 3 erfolgen, in dem inertes Material 7 aufgrund seiner Beschaffenheit während des Rührens nach unten absinkt und dort ausgeschleust werden kann.

Sobald sich die hydratationsbeschleunigenden Keime gebildet haben, wird die Suspension 8 aus dem Reaktor 3 ausgeschleust und einer Einrichtung 9 zur Abtrennung der hydratationsbeschleunigenden Keime 5 zugeführt. Die Einrichtung 9 wird beispielsweise durch einen Hydrozyklon oder eine Filterpresse gebildet. Die verbleibende wässrige Lösung 4' wird üblicherweise mit löslichen Bestandteilen und/oder Schadstoffen aus dem Ausgangsmaterial 1 belastet sein, sodass es zweckmäßig ist, wenigstens einen Teil 4'a der wässrigen Lösung auszuschleusen und einer Einrichtung 10 zur Abtrennung der löslichen Bestandteile oder Schadstoffe zuzuführen. Der verbleibende Teil 4'b kann erneut als wässrige Lösung dem Reaktor 3 zugeführt werden.

Die in der Einrichtung 9 abgetrennten, hydratationsbeschleunigenden Keime 5 stellen das gewünschte Endprodukt dar. Die Keime können in getrockneter oder in flüssiger Form als Suspension Zement oder Beton zugegeben werden, wo sie eine Beschleunigung der Zementhydratation bewirken. Die hydratationsbeschleunigenden Keime 5 werden zuvor noch in einer Mühle 11 auf einen Korngrößenbereich von vorzugsweise 10 nm bis 20 µm zerkleinert. Die beschleunigende Wirkung der dem Bindemittel zugesetzten Keime kann über die Feinheit dem gewünschten beschleunigenden Effekt bei der Hydratation des Bindemittels angepasst werden. Es können auch durch die Mahlung AFt-Phasen gezielt mechanisch zerstört werden, um ein Produkt hydratationsbeschleunigender Keime vorwiegend aus CSH-Phasen bestehend zu erzeugen. Ebenso kann über die Größe und Anzahl der Keime die Gefügebildung des hydratisierten Zementsteins dahingehend beeinflusst werden, dass die Festigkeitsentwicklung und Dauerhaftigkeit bestimmten Anwendungsanforderungen der Bauindustrie oder anderen Verwendungen für Bindemittel besser entspricht.

## Patentansprüche

1. Verwendung von Heißmehl und/oder Bypassstaub aus einem Zementherstellungsprozess (2) als Ausgangsmaterial (1) zur Herstellung von hydratationsbeschleunigenden Keimen (5) aus einer Mischung aus zwei oder mehreren der nachfolgend aufgeführten Phasen, nämlich CSH-Phasen oder AFt/AFm-Phasen oder Hemi- oder Monocarbonat-Phasen, als Zusatzstoff für Zement und/oder Beton, wobei
a. eine Suspension (8) durch Vermischen des Ausgangsmaterials (1) mit einer wässrigen Lösung (4) hergestellt wird, bis sich ein aus hydratationsbeschleunigenden Keimen (5) bestehender Feststoff bildet, und
b. der aus den hydratationsbeschleunigenden Keimen (5) bestehende Feststoff aus der wässrigen Lösung (4) abgetrennt und durch Mahlung weiter zerkleinert wird.

2. Verwendung nach Anspruch 1, wobei die im Verfahrensschritt b) verbleibende wässrige Lösung zumindest teilweise erneut als wässrige Lösung (4) im Verfahrensschritt b) verwendet wird.

3. Verwendung nach Anspruch 1, wobei das Vermischen im Verfahrensschritt a) durch kontinuierliches Rühren erfolgt.

4. Verwendung nach Anspruch 1, wobei vor dem Verfahrensschritt b) sedimentierte inerte Materialien (7) ausgeschleust werden.

5. Verwendung nach Anspruch 1, wobei der Verfahrensschritt b) in einem Reaktor (3) in einem Temperaturbereich von 5 bis 200 °C durchgeführt wird.

6. Verwendung nach Anspruch 1, wobei durch Auswahl der chemisch/mineralogischen Zusammensetzung des Ausgangsmaterials und die Regelung von Verweilzeit und Reaktortemperatur hydratationsbeschleunigende Keime einer gewählten Zusammensetzung erzeugt werden.

7. Verwendung nach Anspruch 1, wobei der *p*H-Wert der Suspension (8) in einem Bereich von 10 bis 14 eingestellt wird.

8. Verwendung nach Anspruch 7, wobei der *p*H-Wert der Suspension (8) durch Veränderung des Verhältnisses von Ausgangsmaterial (1) zu wässriger Lösung (4) eingestellt wird.

9. Verwendung nach Anspruch 1, wobei der Verfahrensschritt a) in einer Schutzgasatmosphäre durchgeführt wird.

10. Verwendung nach Anspruch 1, wobei der Verfahrensschritt b) in einem Hydrozyklon oder einer Filterpresse durchgeführt wird.

11. Verwendung nach Anspruch 1, wobei die nach dem Verfahrensschritt b) verbleibende wässrige Lösung (4') mit löslichen Bestandteilen und/oder Schadstoffen aus dem Ausgangsmaterial belastet ist und wenigstens ein Teil (4'a) der wässrigen Lösung ausgeschleust wird und einer Abtrennung löslicher Bestandteile oder Schadstoffe unterzogen wird.

## Claims

1. Use of hot meal and/or bypass dust from a cement production process (2) as starting material (1) for producing hydration-accelerating nuclei (5) from a mixture of two or more of the phases indicated below, namely CSH phases or AFt/AFm phases or hemicarbonate or monocarbonate phases, as additive for cement and/or concrete, wherein
a. a suspension (8) is produced by mixing the starting material (1) with an aqueous solution (4) until a solid consisting of hydration-accelerating nuclei (5) is formed and
b. the solid consisting of the hydration-accelerating nuclei (5) is separated off from the aqueous solution (4) and comminuted further by milling.

2. Use according to Claim 1, wherein the aqueous solution remaining in process step b) is at least partly reused as aqueous solution (4) in process step b).

3. Use according to Claim 1, wherein the mixing in process step a) is carried out by continuous stirring.

4. Use according to Claim 1, wherein sedimented inert materials (7) are removed before process step b).

5. Use according to Claim 1, wherein process step b) is carried out in a temperature range from 5 to 200°C in a reactor (3).

6. Use according to Claim 1, wherein hydration-accelerating nuclei having a selected composition are produced by selection of the chemomineralogical composition of the starting material and regulation of residence time and reactor temperature.

7. Use according to Claim 1, wherein the pH of the suspension (8) is set in the range from 10 to 14.

8. Use according to Claim 7, wherein the pH of the suspension (8) is set by altering the ratio of starting material (1) to aqueous solution (4).

9. Use according to Claim 1, wherein the process step a) is carried out in a protective gas atmosphere.

10. Use according to Claim 1, wherein the process step b) is carried out in a hydrocyclone or a filter press.

11. Use according to Claim 1, wherein the aqueous solution (4') remaining after process step b) is loaded with soluble constituents and/or pollutants from the starting material and at least a part (4'a) of the aqueous solution is discharged and subjected to removal of soluble constituents or pollutants.

## Revendications

1. Utilisation d'une farine chaude et/ou d'une poussière de dérivation issue d'un procédé de fabrication de ciment (2) en tant que matériau de départ (1) pour la fabrication de germes accélérant l'hydratation (5) constitués d'un mélange de deux ou plus des phases listées ci-après, à savoir les phases CSH ou les phases Aft/AFm ou des phases hémi- ou monocarbonate, en tant qu'additif pour ciment et/ou béton, dans laquelle
a. une suspension (8) est fabriquée par mélange du matériau de départ (1) avec une solution aqueuse (4) jusqu'à la formation d'un solide constitué de germes accélérant l'hydratation (5), et
b. le solide constitué de germes accélérant l'hydratation (5) est séparé de la solution aqueuse (4) et davantage réduit par broyage.

2. Utilisation selon la revendication 1, dans laquelle la solution aqueuse restant à l'étape de procédé b) est au moins partiellement réutilisée en tant que solution aqueuse (4) à l'étape de procédé b).

3. Utilisation selon la revendication 1, dans laquelle le mélange à l'étape de procédé a) a lieu par agitation continue.

4. Utilisation selon la revendication 1, dans laquelle les matériaux inertes sédimentés (7) sont éliminés avant l'étape de procédé b).

5. Utilisation selon la revendication 1, dans laquelle l'étape de procédé b) est réalisée dans un réacteur (3) dans une plage de température allant de 5 à 200 °C.

6. Utilisation selon la revendication 1, dans laquelle des germes accélérant l'hydratation d'une composition choisie sont générés par le choix de la composition chimique/minéralogique du matériau de départ et l'ajustement du temps de séjour et de la température du réacteur.

7. Utilisation selon la revendication 1, dans laquelle le pH de la suspension (8) est ajusté dans une plage allant de 10 à 14.

8. Utilisation selon la revendication 7, dans laquelle le pH de la suspension (8) est ajusté par modification du rapport entre le matériau de départ (1) et la solution aqueuse (4).

9. Utilisation selon la revendication 1, dans laquelle l'étape de procédé a) est réalisée dans une atmosphère de gaz protecteur.

10. Utilisation selon la revendication 1, dans laquelle l'étape de procédé b) est réalisée dans un hydrocyclone ou un filtre presse.

11. Utilisation selon la revendication 1, dans laquelle la solution aqueuse (4') restante après l'étape de procédé b) est chargée avec des constituants et/ou des polluants solubles du matériau de départ, et au moins une partie (4'a) de la solution aqueuse est déchargée et soumise à une séparation des constituants ou polluants solubles.
